# EUROPÄISCHE PATENTSCHRIFT

(11) **EP 3 219 182 B1**
(45) Veröffentlichungstag und Bekanntmachung des Hinweises auf die Patenterteilung: **06.03.2019**
(21) Anmeldenummer: 17161367.2
(22) Anmeldetag: 16.03.2017
(51) Int. Cl.: A01B 59/00, A01B 71/02, G01S 13/00

(54) **EINRICHTUNG ZUR ANBAUGERÄTELOKALISIERUNG AN EINEM LANDWIRTSCHAFTLICHEN TRAKTOR**
DEVICE FOR LOCATING ATTACHMENT ON AN AGRICULTURAL TRACTOR
DISPOSITIF DE LOCALISATION D'OUTILS PORTÉS SUR UN TRACTEUR AGRICOLE

(30) Priorität: 17.03.2016 DE 102016204467
(43) Veröffentlichungstag der Anmeldung: 20.09.2017
(73) Patentinhaber: Deere & Company, Moline, IL 61265 (US)
(72) Erfinder: Baum, Bernd, 68163 Mannheim (DE); Mairet, Daniel W, 68163 Mannheim (DE); Reinmuth, Florian, 68163 Mannheim (DE)
(74) Vertreter: Dehnhardt, Florian Christopher

(56) Entgegenhaltungen:
- EP-A1- 2 018 981
- EP-A2- 2 290 588
- DE-A1- 10 217 398
- DE-A1-102012 202 920

## Beschreibung

Die Erfindung betrifft eine Einrichtung zur Anbaugerätelokalisierung an einem landwirtschaftlichen Traktor.

In diesem Zusammenhang geht aus der EP 2 018 981 A1 ein elektronisches Typenschild für ein landwirtschaftliches Anbaugerät in Gestalt einer RFID-Kennung hervor, die unter anderem Informationen über den Anbaugerätetyp enthält, die sich bei Annäherung mittels eines von einem landwirtschaftlichen Traktor umfassten RFID-Lesegeräts auslesen sowie zur Voreinstellung zugehöriger Betriebsfunktionen des landwirtschaftlichen Traktors heranziehen lassen. Aus der Erfassung der RFID-Kennung lässt sich zwar letztlich auf das Vorhandensein eines an dem landwirtschaftlichen Traktor angebrachten landwirtschaftlichen Anbaugeräts schließen, jedoch geht daraus nicht hervor, ob sich dieses im Front- oder Heckbereich befindet, denn die meisten landwirtschaftlichen Traktoren verfügen in beiden Bereichen über entsprechende mechanische Anbaugeräteschnittstellen. Dieser Umstand erlangt insbesondere bei landwirtschaftlichen Anbaugeräten Bedeutung, die sich sowohl im Front- als auch im Heckbereich des landwirtschaftlichen Traktors anbringen lassen, da die Voreinstellung der Betriebsfunktionen dann in aller Regel unterschiedlich zu erfolgen hat. Hierzu gehören Zusatzgewichte, Düngerstreuer, Kreiseleggen, Mulcher, Mähwerke oder Bodenwalzen.

Es ist daher Aufgabe der vorliegenden Erfindung, eine Einrichtung der eingangs genannten Art hinsichtlich einer verbesserten Anbaugerätelokalisierung an einem landwirtschaftlichen Traktor weiterzubilden.

Diese Aufgabe wird durch ein Fahrzeuggespann mit den Merkmalen des Patentanspruchs 1 gelöst.

Das Fahrzeuggespann, besteht aus einem landwirtschaftlichen Traktor und einem daran angebrachten Anbaugerät, mit einer Einrichtung zur Anbaugerätelokalisierung, wobei die Einrichtung einen ersten traktorseitigen Transponder, der einen einer ersten mechanischen Anbaugeräteschnittstelle des landwirtschaftlichen Traktors zugeordneten ersten Sende- und Empfangsbereich aufweist, und einen zweiten traktorseitigen Transponder, der einen einer zweiten mechanischen Anbaugeräteschnittstelle des landwirtschaftlichen Traktors zugeordneten zweiten Sende- und Empfangsbereich aufweist, wobei jeder der beiden traktorseitigen Transponder eine eigene Positions-ID aussendet, die von einem in einen der beiden Sende- und Empfangsbereiche eintretenden anbaugerätseitigen Transponder empfangen sowie an den versendenden traktorseitigen Transponder rückübermittelt wird.

Anhand der rückübermittelten Positions-ID (das Kürzel "ID" steht hierbei für "Identifikator") lässt sich unmittelbar erkennen, an welcher der beiden mechanischen Anbaugeräteschnittstellen das landwirtschaftliche Anbaugerät angebracht ist. Die empfangene Positions-ID wird hierzu von dem betreffenden traktorseitigen Transponder an eine Kontrolleinheit des landwirtschaftlichen Traktors zur weiteren Verarbeitung gesendet.

Die traktorseitigen Transponder befinden sich typischerweise im Bereich von als Dreipunkt-Geräteanbau ausgebildeten Heck- und Frontkrafthebern und können dort in einen zugehörigen hydraulischen Steuerventilblock integriert sein. Der anbaugeräteseitige Transponder ist in diesem Fall in einem dem Heck- oder Frontkraftheber zugewandten Bereich, beispielsweise an einem zugehörigen Kupplungsrahmen des landwirtschaftlichen Anbaugeräts untergebracht.

Es sei angemerkt, dass es sich auch um beliebige andere (gegebenenfalls zusätzlich vorgesehene) mechanische Anbaugeräteschnittstellen handeln kann, insbesondere um ein im Heckbereich des landwirtschaftlichen Traktors angeordnetes Zugpendel, Kupplungsmaul oder dergleichen. Der Einsatz der erfindungsgemäßen Einrichtung ist insofern nicht auf einen bestimmten Kupplungstyp beschränkt.

Vorteilhafte Weiterbildungen der erfindungsgemäßen Einrichtung gehen aus den Unteransprüchen hervor.

Vorzugsweise ergänzt der anbaugeräteseitige Transponder die Rückübermittlung der Positions-ID um anbaugerätespezifische Daten. Bei diesen anbaugerätespezifischen Daten kann es sich um eine Anbaugerätekennung handeln, die sich zur entsprechenden fahrerunabhängigen Voreinstellung diverser Betriebseinrichtungen des landwirtschaftlichen Traktors heranziehen lässt. Bei den anbaugerätespezifischen Daten handelt es sich beispielsweise um Angaben hinsichtlich der mittels des betreffenden landwirtschaftlichen Anbaugeräts ausführbaren Arbeitsfunktionen oder des Eigengewichts. Die Konfiguration der Betriebseinrichtungen des landwirtschaftlichen Traktors kann in diesem Fall durch Aufrufen eines den Arbeitsfunktionen zugeordneten Steuermenüs auf einer grafischen Benutzerschnittstelle des landwirtschaftlichen Traktors und/oder durch Einsteuerung eines dem Eigengewicht angepassten Reifenfülldrucks in zugehörige Traktorreifen mittels einer zentralen Reifendruckregelanlage erfolgen.

Der anbaugeräteseitige Transponder kann batteriebetrieben und damit baulich autark sein, sodass eine nachträgliche Anbringung auch an älteren landwirtschaftlichen Anbaugeräten möglich ist.

Um eine Fehllokalisierung des landwirtschaftlichen Anbaugeräts zu vermeiden, ist die Feldstärke der traktorseitigen Transponder derart bemessen, dass Überschneidungen beider Sende- und Empfangsbereiche ausgeschlossen sind. Dies erlaubt eine eindeutige Zuordnung zwischen dem betreffenden Sende- und Empfangsbereich und der jeweiligen mechanischen Anbaugeräteschnittstelle.

Ferner besteht die Möglichkeit, dass die Transponder entsprechend dem Bluetooth-Protokoll gemäß IEEE 802.15.1 arbeiten. Bei den insofern einzusetzenden Transponderbaugruppen handelt es sich um gängige Standardteile, die eine kostengünstige Umsetzung der erfindungsgemäßen Einrichtung möglich machen.

Um elektrische Energie zu sparen, kann der anbaugeräteseitige Transponder solange in einen Standby-Modus versetzt sein, bis dieser in den Sende- und Empfangsbereich eines der beiden traktorseitigen Transponder eintritt. Mit anderen Worten wird der anbaugeräteseitige Transponder erst dann geweckt, wenn das landwirtschaftliche Anbaugerät an einer der beiden mechanischen Anbaugeräteschnittstellen des landwirtschaftlichen Traktors angebracht wird. Dies ist vor allem im Hinblick auf einen möglichen Batteriebetrieb des anbaugeräteseitigen Transponders von Vorteil.

Zur Verbesserung der Störsicherheit ist es vorstellbar, dass jeder der traktorseitigen Transponder eine zeitliche Koinzidenz zwischen gesendeter und empfangener Positions-ID herstellt. Dies kann durch Vorgabe eines mit Absenden der Positions-ID geöffneten Zeitfensters erfolgen, innerhalb dessen die Rückübermittlung der Positions-ID zu erfolgen hat. Eine außerhalb des Zeitfensters empfangene Positions-ID wird demnach von den traktorseitigen Transpondern ignoriert.

Daneben ist es möglich, dass jeder der traktorseitigen Transponder eine traktorindividuelle, insbesondere aus einer Seriennummer des landwirtschaftlichen Traktors abgeleitete Positions-ID erzeugt. Störungen aufgrund von in der Nähe befindlichen bzw. vorbeifahrenden landwirtschaftlichen Traktoren, die ebenfalls mit der erfindungsgemäßen Einrichtung ausgestattet sind, lassen sich so sicher ausschließen.

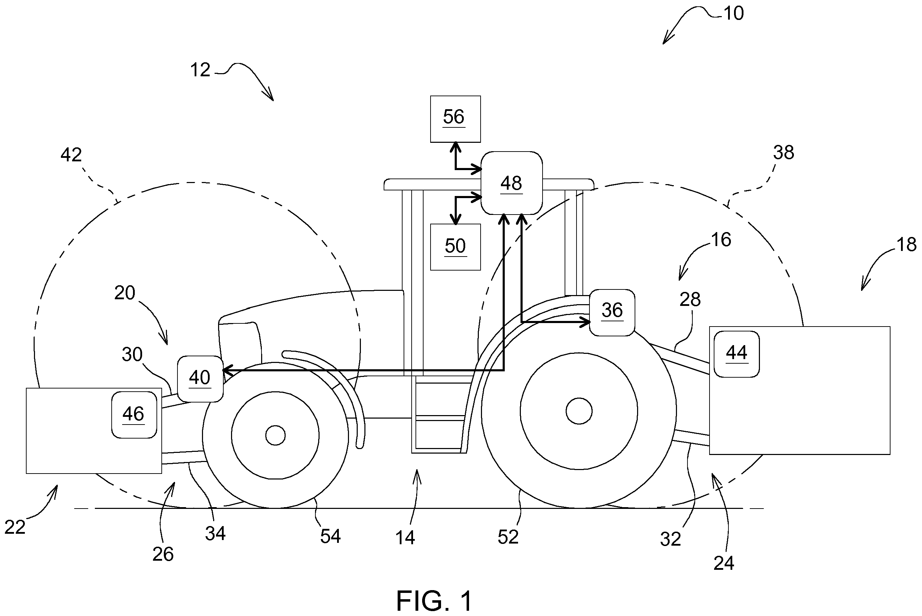

Die erfindungsgemäße Einrichtung zur Anbaugerätelokalisierung an einem landwirtschaftlichen Traktor wird im Folgenden anhand der beigefügten Zeichnung näher erläutert.

Die einzige Figur zeigt ein schematisch dargestelltes Ausführungsbeispiel der erfindungsgemäßen Einrichtung.

Die Einrichtung 10 ist beispielsgemäß Bestandteil eines Fahrzeuggespanns 12, das aus einem landwirtschaftlichen Traktor 14 und einem an einer ersten mechanischen Anbaugeräteschnittstelle 16 angebrachten ersten landwirtschaftlichen Anbaugerät 18 sowie einem an einer zweiten mechanischen Anbaugeräteschnittstelle 20 angebrachten zweiten landwirtschaftlichen Anbaugerät 22 besteht.

Die Abbildung hat lediglich beispielhaften Charakter, so ist es auch möglich, dass sich ausschließlich an einer der beiden mechanischen Anbaugeräteschnittstellen 16, 20 ein landwirtschaftliches Anbaugerät 18, 22 befindet.

Im vorliegenden Fall handelt es sich bei den beiden mechanischen Anbaugeräteschnittstellen 16, 20 um jeweils als Dreipunkt-Geräteanbau ausgebildete Heck- und Frontkraftheber 24, 26 herkömmlicher Bauart. Diese umfassen einen schwenkbar angebrachten zentralen Oberlenker 28, 30 sowie zwei an gegenüberliegenden Seiten eines Differentialgehäuses bzw. eines Frontzapfwellengehäuses schwenkbar angebrachte Unterlenker 32, 34, die sich mittels hydraulischer Hubzylinder über zwischenliegende Hubspindeln anheben bzw. absenken lassen. Aufgrund der gewählten zeichnerischen Darstellung ist lediglich der vordere der beiden Unterlenker sichtbar. Jeder der Ober- und Unterlenker 28, 30, 32, 34 weist an seinem freien Ende einen Fanghaken auf, an dem sich eine von einem Kupplungsrahmen des landwirtschaftlichen Anbaugeräts 18, 22 umfasste Kupplungskugel einhängen lässt.

Des Weiteren umfasst die Einrichtung 10 einen ersten traktorseitigen Transponder 36, der einen der ersten mechanischen Anbaugeräteschnittstelle 16 bzw. dem Heckkraftheber 24 zugeordneten ersten Sende- und Empfangsbereich 38 aufweist, und einen zweiten traktorseitigen Transponder 40, der einen der zweiten mechanischen Anbaugeräteschnittstelle 20 bzw. dem Frontkraftheber 26 zugeordneten zweiten Sende- und Empfangsbereich 42 aufweist. Die traktorseitigen Transponder 36, 40 sind in einen von dem Heck- bzw. Frontkraftheber 24, 26 umfassten Steuerventilblock integriert, an dem sich zugehörige hydraulische Versorgungsleitungen des landwirtschaftlichen Anbaugeräts 18, 22 ankuppeln lassen.

Des Weiteren ist ein erster anbaugeräteseitiger Transponder 44 und ein zweiter anbaugeräteseitiger Transponder 46 vorhanden. Die anbaugeräteseitigen Transponder 44, 46 sind in einem dem Heck- bzw. Frontkraftheber 24, 26 zugewandten Bereich, beispielsweise an einem zugehörigen Kupplungsrahmen des landwirtschaftlichen Anbaugeräts 18, 22 untergebracht. Die anbaugeräteseitigen Transponder 44, 46 sind batteriebetrieben damit baulich autark.

Die Transponder 36, 40, 44, 46 arbeiten entsprechend dem Bluetooth-Protokoll gemäß IEEE 802.15.1.

Die Feldstärke der traktorseitigen Transponder 36, 40 ist derart bemessen, dass Überschneidungen beider Sende- und Empfangsbereiche 38, 42 ausgeschlossen sind.

Jeder der beiden traktorseitigen Transponder 36, 40 sendet eine eigene Positions-ID in Form eines entsprechenden Datenpakets aus, die beim Anbringen des landwirtschaftlichen Anbaugeräts 18, 22 von dem in den betreffenden Sende- bzw. Empfangsbereich 38, 42 eintretenden anbaugeräteseitigen Transponder 44, 46 empfangen sowie an den versendenden traktorseitigen Transponder 36, 40 rückübermittelt wird.

Anhand der rückübermittelten Positions-ID lässt sich unmittelbar erkennen, an welcher der beiden mechanischen Anbaugeräteschnittstellen 16, 20 das landwirtschaftliche Anbaugerät 18, 22 angebracht ist. Die empfangene Positions-ID wird hierzu von dem traktorseitigen Transponder 36, 40 an eine Kontrolleinheit 48 des landwirtschaftlichen Traktors 14 zur weiteren Verarbeitung gesendet.

Der anbaugeräteseitige Transponder 44, 46 ergänzt die Rückübermittlung der Positions-ID um anbaugerätespezifische Daten, die sich aus einer in einem Speicher des anbaugeräteseitigen Transponders 44, 46 abgelegten Anbaugerätekennung ergeben. Die mit-übermittelten anbaugerätespezifischen Daten werden von der Kontrolleinheit 48 zur fahrerunabhängigen Voreinstellung diverser Betriebseinrichtungen des landwirtschaftlichen Traktors 14 herangezogen. Bei den anbaugerätespezifischen Daten handelt es sich beispielsweise um Angaben hinsichtlich der mittels des betreffenden landwirtschaftlichen Anbaugeräts 18, 22 ausführbaren Arbeitsfunktionen oder des Eigengewichts. Die Konfiguration der Betriebseinrichtungen des landwirtschaftlichen Traktors 14 erfolgt in diesem Fall durch Aufrufen eines den Arbeitsfunktionen zugeordneten Steuermenüs auf einer grafischen Benutzerschnittstelle 50 des landwirtschaftlichen Traktors 14 und/oder durch Einsteuerung eines dem Eigengewicht angepassten Reifenfülldrucks in zugehörige Traktorreifen 52, 54 mittels einer zentralen Reifendruckregelanlage 56.

Um elektrische Energie zu sparen, ist der anbaugeräteseitige Transponder 44, 46 solange in einen Standby-Modus versetzt, bis dieser in den Sende- und Empfangsbereich 38, 42 des traktorseitigen Transponders 36, 40 eintritt. Mit anderen Worten wird der anbaugeräteseitige Transponder 44, 46 erst dann geweckt, wenn das landwirtschaftliche Anbaugerät 18, 22 tatsächlich an dem landwirtschaftlichen Traktor 14 angebracht wird.

Zur Verbesserung der Störsicherheit stellt der traktorseitige Transponder 36, 40 eine zeitliche Koinzidenz zwischen gesendeter und empfangener Positions-ID her. Dies erfolgt durch Vorgabe eines mit Absenden der Positions-ID geöffneten Zeitfensters, innerhalb dessen die Rückübermittlung der Positions-ID zu erfolgen hat. Eine außerhalb des Zeitfensters empfangene Positions-ID wird demnach von dem traktorseitigen Transponder 36, 40 ignoriert.

Der traktorseitige Transponder 36, 40 erzeugt eine traktorindividuelle, genauer gesagt aus einer Seriennummer des landwirtschaftlichen Traktors 14 abgeleitete Positions-ID. Störungen aufgrund von in der Nähe befindlichen bzw. vorbeifahrenden landwirtschaftlichen Traktoren, die ebenfalls mit der erfindungsgemäßen Einrichtung ausgestattet sind, lassen sich so sicher ausschließen.

## Patentansprüche

1. Fahrzeuggespann, bestehend aus einem landwirtschaftlichen Traktor (14) und einem daran angebrachten Anbaugerät (18, 22), mit einer Einrichtung (10) zur Anbaugerätelokalisierung, wobei die Einrichtung (10) einen ersten traktorseitigen Transponder (36), der einen einer ersten mechanischen Anbaugeräteschnittstelle (16) des landwirtschaftlichen Traktors (14) zugeordneten ersten Sende- und Empfangsbereich (38) aufweist, und einen zweiten traktorseitigen Transponder (40), der einen einer zweiten mechanischen Anbaugeräteschnittstelle (20) des landwirtschaftlichen Traktors (14) zugeordneten zweiten Sende- und Empfangsbereich (42) aufweist, umfasst, wobei jeder der beiden traktorseitigen Transponder (36, 40) eine eigene Positions-ID aussendet, die von einem in einen der beiden Sende- und Empfangsbereiche (38, 42) eintretenden anbaugerätseitigen Transponder (44, 46) empfangen sowie an den versendenden traktorseitigen Transponder (36, 40) rückübermittelt wird.

2. Fahrzeuggespann nach Anspruch 1, **dadurch gekennzeichnet, dass** der anbaugeräteseitige Transponder (44, 46) ausgebildet ist, die Rückübermittlung der Positions-ID um anbaugerätespezifische Daten zu ergänzen.

3. Fahrzeuggespann nach Anspruch 1 oder 2, **dadurch gekennzeichnet, dass** der anbaugeräteseitige Transponder (44, 46) batteriebetrieben ist.

4. Fahrzeuggespann nach wenigstens einem der vorhergehenden Ansprüche, **dadurch gekennzeichnet, dass** die Feldstärke der traktorseitigen Transponder (36, 40) derart bemessen ist, dass Überschneidungen beider Sende- und Empfangsbereiche (38, 42) ausgeschlossen sind.

5. Fahrzeuggespann nach wenigstens einem der vorhergehenden Ansprüche, **dadurch gekennzeichnet, dass** die Transponder (36, 40, 44, 46) entsprechend dem Bluetooth-Protokoll gemäß IEEE 802.15.1 arbeiten.

6. Fahrzeuggespann nach wenigstens einem der vorhergehenden Ansprüche, **dadurch gekennzeichnet, dass** der anbaugeräteseitige Transponder (44, 46) ausgebildet ist, solange in einen Standby-Modus versetzt zu sein, bis dieser in den Sende- und Empfangsbereich (38, 42) eines der beiden traktorseitigen Transponder (36, 40) eintritt.

7. Fahrzeuggespann nach wenigstens einem der vorhergehenden Ansprüche, **dadurch gekennzeichnet, dass** jeder der traktorseitigen Transponder (36, 40) eine zeitliche Koinzidenz zwischen gesendeter und empfangener Positions-ID herstellt.

8. Fahrzeuggespann nach wenigstens einem der vorhergehenden Ansprüche, **dadurch gekennzeichnet, dass** jeder der traktorseitigen Transponder (36, 40) eine traktorindividuelle, insbesondere aus einer Seriennummer des landwirtschaftlichen Traktors (14) abgeleitete Positions-ID erzeugt.

## Claims

1. Vehicle combination, comprised of an agricultural tractor (14) and an implement (18, 22) which is attached thereto, having a device (10) for determining the location of the implement, wherein the device (10) has a first tractor-side transponder (36) which has a first transceiver region (38) which is assigned to a first mechanical implement interface (16) of the agricultural tractor (14), and a second tractor-side transponder (40) which has a second transceiver region (42) which is assigned to a second mechanical implement interface (20) of the agricultural tractor (14), wherein each of the two tractor-side transponders (36, 40) emits a separate positon ID which is received by an implement-side transponder (44, 46) which enters one of the two transmission and reception regions (38, 42), and is transmitted back to the sending tractor-side transponder (36, 40).

2. Vehicle combination according to Claim 1, **characterized in that** the implement-side transponder (44, 46) is designed to add implement-specific data to the transmission back of the position ID.

3. Vehicle combination according to Claim 1 or 2, **characterized in that** the implement-side transponder (44, 46) is battery-operated.

4. Vehicle combination according to at least one of the preceding claims, **characterized in that** the field strength of the tractor-side transponders (36, 40) is dimensioned such that overlaps between the two transmission and reception regions (38, 42) are precluded.

5. Vehicle combination according to at least one of the preceding claims, **characterized in that** the transponders (36, 40, 44, 46) operate in accordance with the Bluetooth protocol according to IEEE 802.15.1.

6. Vehicle combination according to at least one of the preceding claims, **characterized in that** the implement-side transponder (44, 46) is designed to be placed in a standby mode until said transponder (44, 46) enters the transmission and reception area (38, 42) of one of the two tractor-side transponders (36, 40).

7. Vehicle combination according to at least one of the preceding claims, **characterized in that** each of the tractor-side transponders (36, 40) establishes chronological coincidence between transmitted and received position IDs.

8. Vehicle combination according to at least one of the preceding claims, **characterized in that** each of the tractor-side transponders (36, 40) generates a tractor-specific position ID, which is derived, in particular, from a serial number of the agricultural tractor (14).

## Revendications

1. Attelage de véhicules, composé d'un tracteur agricole (14) et d'un équipement accessoire (18, 22) monté sur celui-ci, comprenant un dispositif (10) de localisation d'équipement accessoire, le dispositif (10) possédant un premier transpondeur (36) côté tracteur, lequel possède une première zone d'émission et de réception (38) associée à une première interface d'équipement accessoire (16) mécanique du tracteur agricole (14), et un deuxième transpondeur (40) côté tracteur, lequel possède une deuxième zone d'émission et de réception (42) associée à une deuxième interface d'équipement accessoire (20) mécanique du tracteur agricole (14), chacun des deux transpondeurs (36, 40) côté tracteur émettant un ID de position propre qui est reçu par un transpondeur (44, 46) côté équipement accessoire pénétrant dans l'une des deux zones d'émission et de réception (38, 42) et qui est renvoyé au transpondeur (36, 40) côté tracteur émetteur.

2. Attelage de véhicules selon la revendication 1, **caractérisé en ce que** le transpondeur (44, 46) côté équipement accessoire est configuré pour compléter l'ID de position renvoyé avec des données spécifiques à l'équipement accessoire.

3. Attelage de véhicules selon la revendication 1 ou 2, **caractérisé en ce que** le transpondeur (44, 46) côté équipement accessoire fonctionne sur batterie.

4. Attelage de véhicules selon au moins l'une des revendications précédentes, **caractérisé en ce que** l'intensité du champ des transpondeurs (36, 40) côté tracteur est dimensionné de telle sorte que les chevauchements des deux zones d'émission et de réception (38, 42) sont exclus.

5. Attelage de véhicules selon au moins l'une des revendications précédentes, **caractérisé en ce que** les transpondeurs (36, 40, 44, 46) fonctionnent conformément au protocole Bluetooth selon l'IEEE 802.15.1.

6. Attelage de véhicules selon au moins l'une des revendications précédentes, **caractérisé en ce que** le transpondeur (44, 46) côté équipement accessoire est configuré pour être mis dans un mode de veille jusqu'à ce que celui-ci pénètre dans la zone d'émission et de réception (38, 42) de l'un des deux transpondeurs (36, 40) côté tracteur.

7. Attelage de véhicules selon au moins l'une des revendications précédentes, **caractérisé en ce que** chacun des deux transpondeurs (36, 40) côté tracteur établit une coïncidence dans le temps entre les ID de position émis et reçu.

8. Attelage de véhicules selon au moins l'une des revendications précédentes, **caractérisé en ce que** chacun des deux transpondeurs (36, 40) côté tracteur génère un ID de position individuel de tracteur, notamment dérivé d'un numéro de série du tracteur agricole (14).
